# EUROPÄISCHE PATENTSCHRIFT

(11) **EP 2 006 184 B1**
(45) Veröffentlichungstag und Bekanntmachung des Hinweises auf die Patenterteilung: **29.06.2011**
(21) Anmeldenummer: 08008345.4
(22) Anmeldetag: 02.05.2008
(51) Int. Cl.: B62B 5/06

(54) **Verstellgriffmechanismus für Rollwagen, Stapelkarren und dergleichen**
Adjustment grip mechanism for roll cars, nestable trolleys and similar
Mécanisme de poignée de réglage pour chariot roulant, chariot emboîtable ou analogue

(30) Priorität: 23.06.2007 DE 202007008802 U
(43) Veröffentlichungstag der Anmeldung: 24.12.2008
(73) Patentinhaber: EXPRESSO DEUTSCHLAND GMBH, 34123 Kassel (DE)
(72) Erfinder: Boller, Stefan, 34123 Kassel (DE)
(74) Vertreter: Gallo, Wolfgang

(56) Entgegenhaltungen:
- EP-A- 0 628 464
- DE-A1- 2 648 349
- DE-U1- 20 319 189
- US-A- 6 098 492
- US-A1- 2003 132 614
- US-B1- 6 651 992

## Beschreibung

Die Erfindung betrifft einen Verstellgriffmechanismus für manuell bewegte Rollwagen, Stapelkarren und dergleichen. Einen Verstellgriffmechanismus gemäß dem Oberbegriff von Anspruch 1 zeigt die US 6,098,492.

Ein wichtiges Kriterium bei handbetätigten Rollwagen, Stapelkarren und dergleichen ist die leichte und bequeme, möglichst wenig krafterfordernde Bedienbarkeit und in diesem Zusammenhang eine möglichst optimale Anpassung der Griffe an anatomische Gegebenheiten, nämlich insbesondere die Körpergröße der solche Rollwagen und Stapelkarren bewegenden Personen.

Da aber Statur und Körpergröße solcher Personen innerhalb eines erheblichen Bereichs unterschiedlich sein können, ist es klar, dass eine optimale Handhabbarkeit solcher Rollwagen oder Stapelkarren nur dann erreichbar ist, wenn die Betätigungsgriffe in ihrer Position und/oder Ausrichtung verstellbar sind.

Wenn, wie das im gewerblichen Einsatz häufig der Fall ist, Stapelkarren oder Rollwagen von verschiedenen Personen benutzt oder bewegt werden, ist es wünschenswert, eine Verstellung der Griffe schnell und einfach vornehmen zu können. Ist eine Verstellung nur umständlich und mit Hilfe von Werkzeug möglich, wird sie aus Bequemlichkeit, aus Zeitmangel oder mangels Werkzeug meist unterlassen, was aber dann zu gesundheitlichen Schäden bei den Benutzern führen kann.

Aufgabe der Erfindung ist es daher, einen Griffmechanismus für Rollwagen, Stapelkarren oder dergleichen zu schaffen, der mit wenigen Handgriffen schnell und einfach zur Anpassung an die körperlichen Gegebenheiten eines Benutzers verstellbar ist.

Diese Aufgabe wird gemäß der Erfindung durch die im Anspruch 1 angegebene Anordnung gelöst. Vorteilhafte Weiterbildungen und Ausgestaltungen der Erfindung sind Gegenstand der Unteransprüche.

Der erfindungsgemäße Griffmechanismus ermöglicht eine Höhenverstellung der Griffe entlang von Holmen des Rollwagens oder Stapelkarrens, wobei das Lösen und Arretieren der Griffe am jeweiligen Holm mittels eines Schnellspannmechanismus erfolgt. Dabei kann die Anordnung so getroffen sein, dass mittels des Schnellspannmechanismus gleichzeitig sowohl eine Formschlussverbindung als auch eine Kraftschlussverbindung hergestellt bzw. gelöst werden kann. Darüber hinaus lassen sich die Neigung der Griffe und die Länge der Griffe verstellen.

Die Erfindung wird nachstehend anhand eines Ausführungsbeispiels unter Bezugnahme auf die anliegenden Zeichnungen in näheren Einzelheiten beschrieben. In den Zeichnungen zeigt:
- Fig. 1: in perspektivischer Darstellung den oberen Teil eines Holmenpaars eines Stapelkarrens oder Rollwagens mit daran angeordneten verstellbaren Griffen in Lösestellung und unterer Position,
- Fig. 2: eine Darstellung ähnlich Figur 1 mit den Griffen in Arretierstellung und oberer Position,
- Fig. 3: in perspektivischer Darstellung das holmseitige Griffträgerstück jedes Griffs,
- Fig. 4: in perspektivischer Darstellung das griffseitige Griffträgerstück jedes Griffs,
- Fig. 5: eine Seitenansicht des holmseitigen Griffträgerstücks mit Schnell- spannhebeln in Richtung des Pfeils V in Figur 3 gesehen,
- Fig. 6a: einen Schnitt längs der Linie A-A in Figur 5 bei gelöstem Schnellspannmechanismus,
- Fig. 6b: einen Schnitt ähnlich Figur 6a bei geschlossenem Schnellspannmechanismus,
- Fig. 7a: einen Schnitt längs der Linie B-B in Figur 5 bei gelöstem Schnellspannmechanismus
- Fig. 7b: einen Schnitt ähnlich Figur 7a bei geschlossenem Schnellspannmechanismus,
- Fig. 8: in perspektivischer Darstellung eine abgewandelte Ausführungsform der Erfindung,
- Fig. 9: in perspektivischer Darstellung das holmseitige Griffträgerstück der abgewandelten Ausführungsform,
- Fig. 10a: einen Schnitt durch die Formschlussverriegelung der abgewandelten Ausführungsform im verriegelten Zustand, und
- Fig. 10b: einen Schnitt ähnlich Figur 10a im entriegelten Zustand.

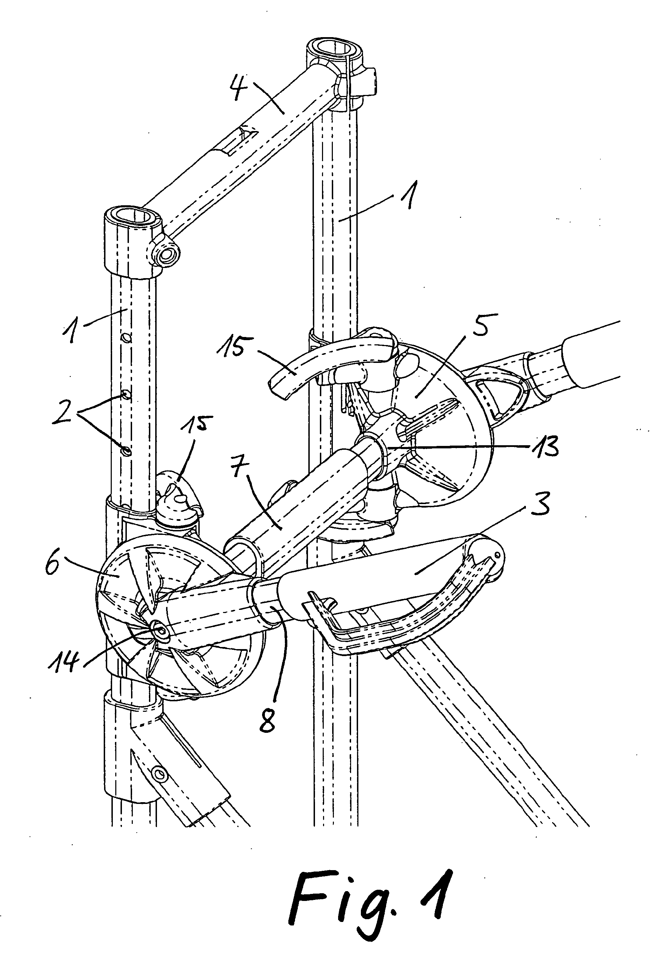

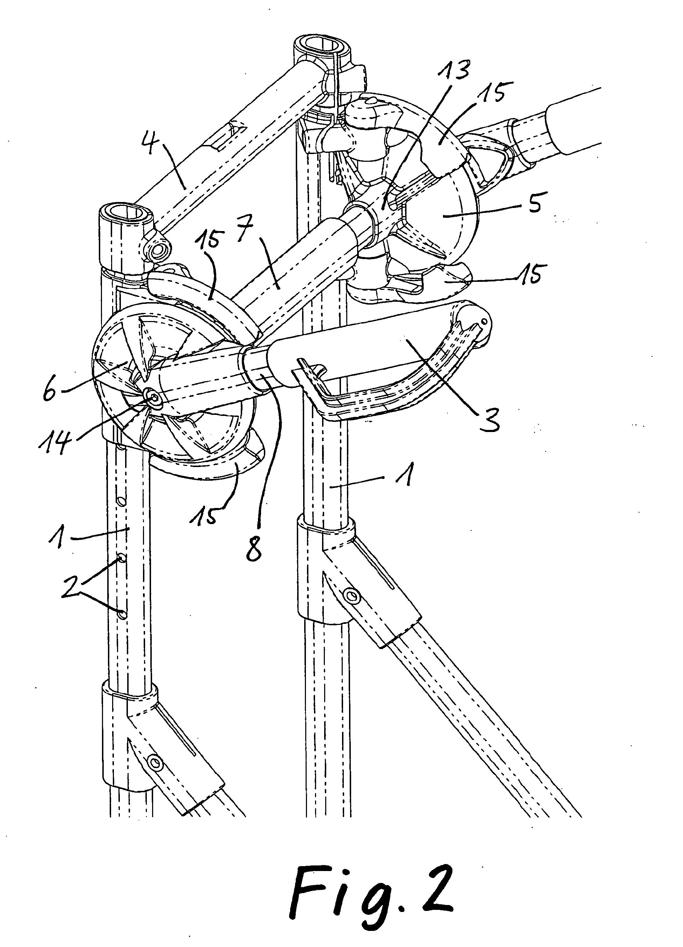

Die Figuren 1 und 2 zeigen den oberen Teil von Holmen 1 mit jeweils einer Reihe von Rastlöchern 2 einer Stapelkarre oder ähnlichen Karre mit daran höhenverstellbaren Griffen 3, wobei die Holme 1 oben durch eine Quertraverse 4 miteinander verbunden sind.

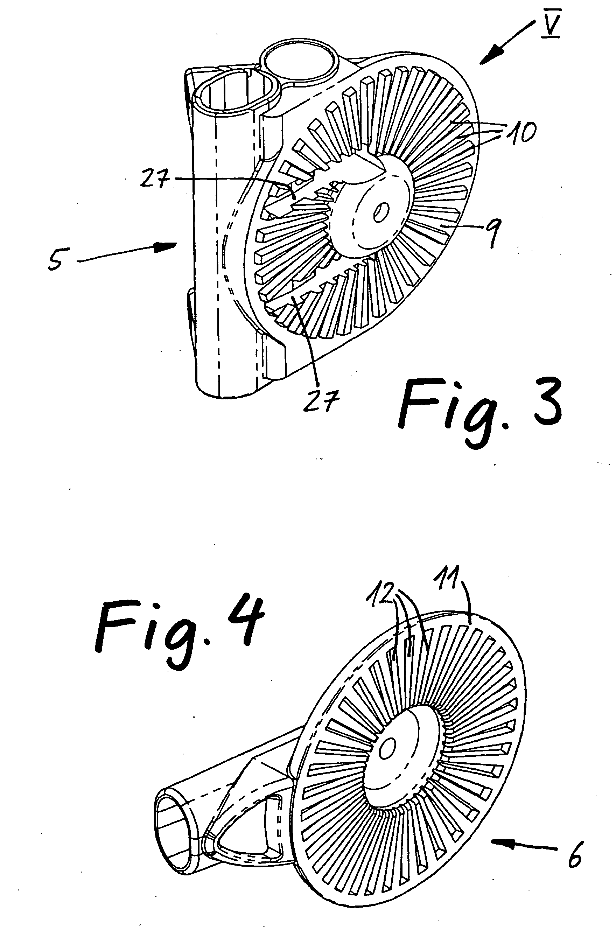

Die Griffe 3 sind jeweils über einen Griffträger mit dem jeweiligen Holm 1 verbunden, wobei der Griffträger jeweils aus einem holmseitigen Griffträgerstück 5 (Figur 3) und einem griffseitigen Griffträgerstück 6 (Figur 4) besteht. Die Griffträger sind durch eine Verbindungs- und Spannmechanik 7 miteinander verbunden. Jeder Griff 3 ist über eine Trägerstange 8 mit dem griffseitigen Griffträgerstück 6 verbunden.

Wie die Figuren 3 und 4 zeigen, hat das holmseitige Griffträgerstück 5 eine kreisförmige Anlagefläche 9 mit darauf strahlenförmig angeordneten Rippen 10, und das griffseitige Griffträgerstück 6 hat eine ebenfalls kreisförmige Anlagefläche 11 mit darin strahlenartig gebildeten radialen Nuten 12, die komplementär zu den Rippen 10 angeordnet sind. Das holmseitige Griffträgerstück 5 und das griffseitige Griffträgerstück 6 jedes Griffträgers liegen mit ihren Anlageflächen 9 und 11 aneinander an und können demgemäß in der Teilung der Rippen 10 bzw. Nuten 12 entsprechenden Winkelschritten relativ zueinander drehwinkelverstellt werden, um eine jeweils gewünschte Neigung oder Orientierung der jeweiligen Trägerstange 8 mit dem zugehörigen Griff 3 zu wählen.

Die Verbindungs- und Spannmechanik 7 greift jeweils in eine Muffe 13 der beiden holmseitigen Griffträgerstücke 5 und weist (nicht im einzelnen dargestellt) vorzugsweise eine Schnellspannmechanik auf, mittels welcher die beiden griffseitigen Griffträgerstücke 6 jeweils gleichzeitig zwecks Drehwinkelverstellung gelöst bzw. zwecks Arretierung an das jeweilige holmseitige Griffträgerstück 5 gespannt werden können. Dies kann durch eine Mechanik geschehen, welche die in den Figuren 1 und 2 gezeigten Schrauben 14 im Inneren der Verbindungs- und Spannmechanik 7 zum Lösen axial auswärts bewegt bzw. zum Spannen axial einwärts zieht, wobei gleichzeitig die innenliegenden holmseitigen Griffträgerstücke durch die Mechanik 7 axial abgestützt werden.

Des weiteren ist jeder Griff 3 auf der zugehörigen Trägerstange 8 vorzugsweise nicht starr befestigt, sondern mittels eines ebenfalls nicht im einzelnen dargestellten Schnellspannmechanismus auf der Trägerstange 8 lösbar bzw. in wählbaren Positionen arretierbar, um die Distanz zwischen dem Griff 3 und dem griffseitigen Griffträgerstück 6 verstellen zu können.

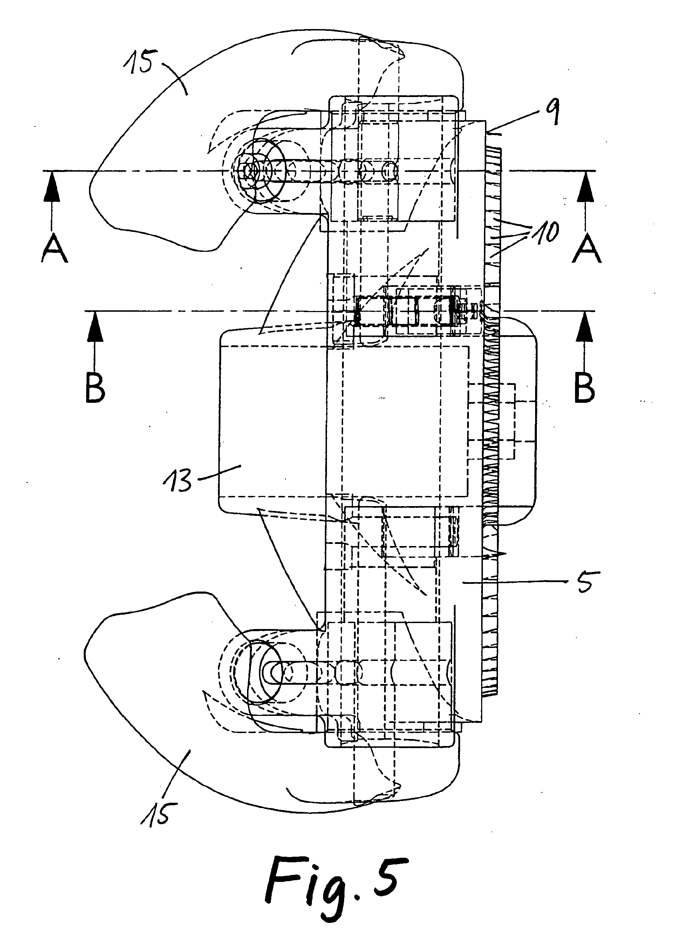

Die holmseitigen Griffträgerstücke 5 sind jeweils auf dem betreffenden Holm 1 höhenverstellbar angeordnet. Sie sind jeweils um eine horizontale (das heißt quer zur Holmlängsachse verlaufende) Symmetrieachse symmetrisch ausgebildet, so dass sie an jedem der beiden gegenüberstehenden Holme 1 verwendet werden können. Dementsprechend ist auch jedes holmseitige Griffträgerstück 5 mit zwei Schnellspannmechanismen versehen, von denen in den Figuren 1 und 2 jeweils der oben und unten am holmseitigen Griffträgerstück angeordnete Betätigungshebel 15 sichtbar ist. Jeder Schnellspannmechanismus bewirkt sowohl eine formschlüssige als auch kraftschlüssig spannende Verbindung zwischen dem holmseitigen Griffträgerstück 5 und dem betreffenden Holm 1. Aufbau und Wirkungsweise dieser Schnellspannmechanismen werden nachstehend unter Bezugnahme auf die Figuren 5 bis 7 beschrieben.

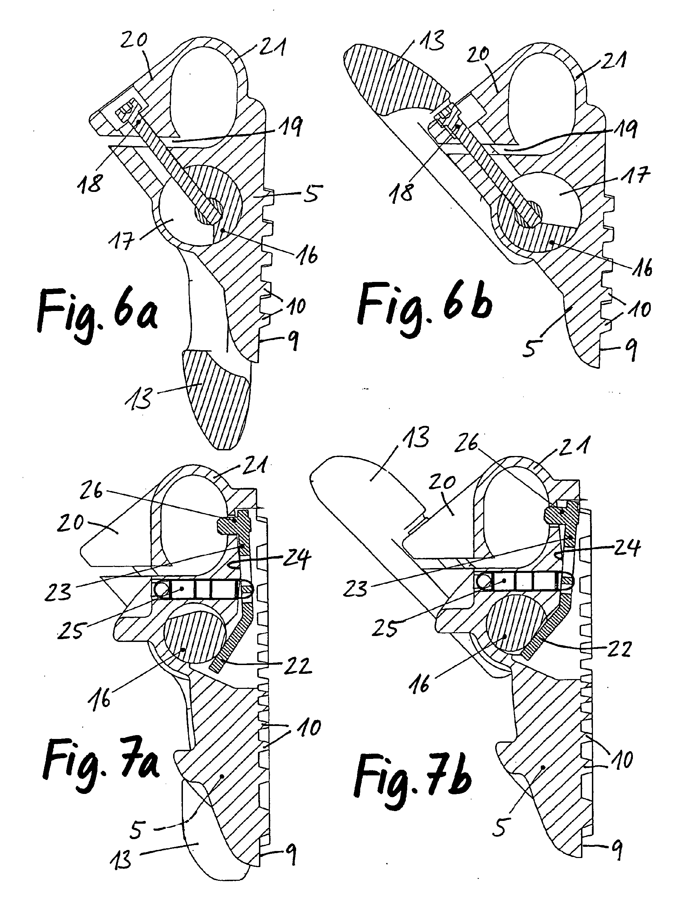

Figur 5 zeigt dabei eine Ansicht eines holmseitigen Griffträgerstücks 5 in Richtung des Pfeils V in Figur 3. Man erkennt die Anlagefläche 9 mit den strahlenförmig angeordneten Rippen 10, weiter die Muffe 13 zur Aufnahme des betreffenden Endes der Verbindungs- und Spannmechanik 7, und den unteren und den oberen Betätigungshebel 15. Die eingezeichneten Schnittlinie A-A und B-B zeigen die Lage der in den Figuren 6a und 6b (Schnittlinie A-A) und den Figuren 7a und 7b (Schnittlinie B-B) gezeigten Schnitte, so dass die in diesen Schnitten gezeigte Mechanik verständlich wird. Dabei ist noch darauf hinzuweisen, dass Figur 5 das holmseitige Griffträgerstück 5 in der Lösestellung der Schnellspannmechanismen zeigt.

Gemäß den Figuren 6a, 6b und 7a, 7b ist der Betätigungshebel 15 mit einem Exzenterzapfen 16 verbunden, der in einer Bohrung 17 im holmseitigen Griffträgerstück 5 drehbar ist.

Wie die Figuren 6a und 6b zeigen, ist der Exzenterzapfen 16 mit einer Schraube 18 gekuppelt, deren Kopf mit einem durch eine Schlitzung 19 vom übrigen Griffträgerstück getrennten Schenkel 20 einer den Holm 1 aufnehmenden, im Griffträgerstück 5 gebildeten Büchse 21 zur Aufnahme des Holms 1 zusammenwirkt.

In der in Figur 6a dargestellten Drehstellung des Exzenterzapfens 16, welche die Lösestellung ist, hat der Kopf der Schraube 18, wie in der Zeichnung deutlich ersichtlich ist, Spielraum, so dass der Schenkel 20 ungespannt ist und das Griffträgerstück 5 nicht am Holm 1 festgeklemmt ist. In der in Figur 6b gezeigten Drehstellung des Exzenterzapfens 16 ist die Schraube 18 mit ihrem Kopf gegen die entsprechende Anlagefläche am Schenkel 20 gespannt, so dass die Büchse 21 zusammengezogen ist und auf dem Holm 1 (der hier nicht dargestellt ist) klemmend sitzt.

Wie die Figuren 7a und 7b zeigen, betätigt der Exzenterzapfen 16 in einer bezüglich der Schraube 18 versetzten Ebene (Schnittlinie B-B in Figur 5) auch noch einen Hebelarm 22 einer Wippe 23, die um eine Kante 24 am Griffträgerstück 5 kippbar gelagert ist. Eine Zugfeder 25 greift an einer Stelle zwischen der Kante 24 und dem Exzenterzapfen 16 an der Wippe 23 an und spannt diese somit in die Lösestellung (plus 7a) vor. In der Lösestellung gemäß Figur 7a steht der Exzenterzapfen 16 so, dass die Zugfeder 25 die Wippe mit dem Hebelarm 22 zum Exzenterzapfen 16 heranziehen kann, so dass ein Rastzapfen 26, der am anderen Ende der Wippe 23 gebildet ist, zurückgezogen ist.

Figur 7b zeigt die Schließ- oder Spannstellung des Schnellspannmechanismus. Hier ist der Exzenterzapfen 16 gedreht und wirkt nun als Nocken, der den Hebelarm 22 der Wippe 23 entgegen der Vorspannkraft der Zugfeder 25 wegdrückt, so dass die Wippe 23 um die Kante 24 derart gekippt wird, dass der Rastzapfen 26 nun in eines der Rastlöcher 2 des Holms 1 (nicht dargestellt) eingreift. In der Schließposition des Schnellspannmechanismus ist also sowohl gemäß Figur 6b die Büchse 21 um dem Holm herumgespannt und arretiert das Griffträgerstück 5 kraftschlüssig am Holm als auch der Rastzapfen 26 der Wippe 23 gemäß Figur 7b in eines der Rastlöcher 2 des Holms eingerastet und arretiert das Griffträgerstück 5 formschlüssig am Holm.

In Figur 3, welche das holmseitige Griffträgerstück 5 in perspektivischer Ansicht mit Blick auf die Anlagefläche 9 zeigt, sieht man die dort eingearbeiteten Aussparungen 27, in welchen die Wippe 23 mit dem Rastzapfen 26 des jeweiligen Schnellspannmechanismus angeordnet ist. Der Abstand zwischen den Aussparungen 27 entspricht dabei natürlich dem (einfachen oder mehrfachen) Abstand der Rastlöcher 2 im Holm 1.

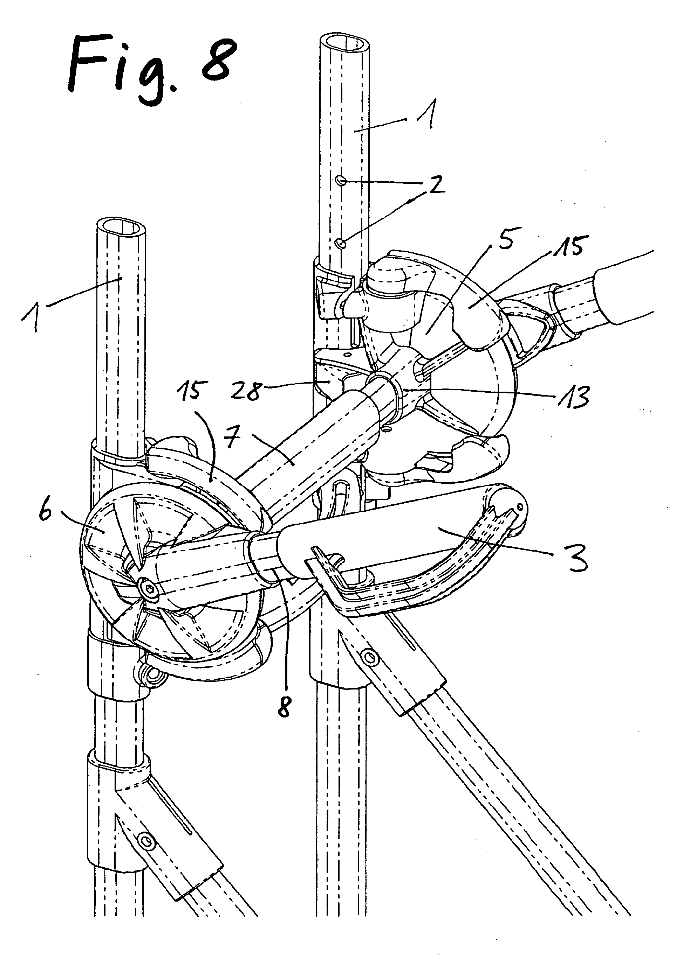

Während bei dem in den Figuren 1 bis 7b beschriebenen Ausführungsbeispiel der Schnellspannmechanismus sowohl die kraftschlüssige als auch die formschlüssige Arretierung mit dem jeweiligen Holm herstellt bzw. löst, ist bei der Ausführungsform nach den Figuren 8 bis 10b die Kraftschluß- und die Formschlussfunktion getrennt. Bei dieser Ausführungsform dient der Schnellspannmechanismus nur dem Lösen und Herstellen der Kraftschlußverbindung mit dem jeweiligen Holm 1, während die Formschlussverbindung davon getrennt ist und über eine am jeweiligen holmseitigen Griffträgerstück 5 in Gestalt einer fingerbetätigbaren Wippe 28 ausgebildete Betätigungseinrichtung herstellbar bzw. lösbar ist. Die Wippe 28 wirkt wiederum formschlüssig auf einen Rastzapfen 29, der in das jeweils gewählte Loch 2 des betreffenden Holms 1 einrastbar ist. Die Wippe 28 ist mittels einer Druckfeder 30 in die Einrastposition vorgespannt und kann zum Lösen entgegen der Vorspannung der Feder 30 niedergedrückt werden.

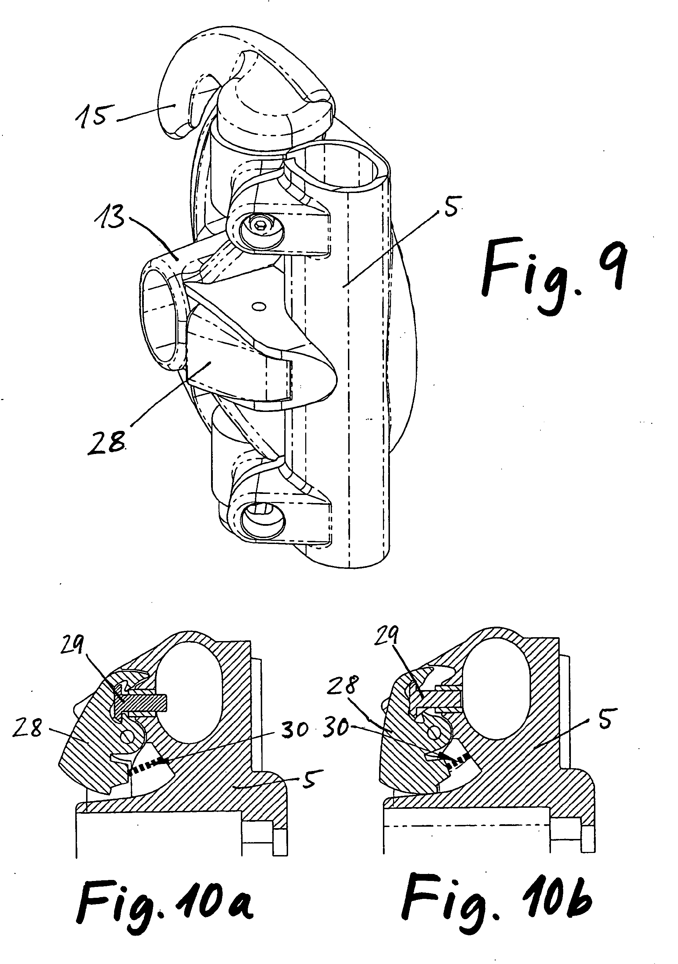

In den Figuren 8 und 9 ist die Anordnung perspektivisch dargestellt, und zwar in Figur 8 in Gestalt der Gesamtanordnung mit den Holmen 1, und in Figur 9 in separater Darstellung des holmseitigen Griffträgerstücks 5, und die Figuren 10A und 10B zeigen die Einrastposition und die Löseposition des Rastzapfens 29 mit der Wippe 28 im Horizontalschnitt.

## Patentansprüche

1. Verstellgriffmechanismus für Rollwagen, Stapelkarren und dgl., mit an Holmen (1) des Rollwagens oder Stapelkarrens in Holmlängsrichtung verstellbaren und an gewählten Positionen fixierbaren Griffträgem (5, 6),
**dadurch gekennzeichnet,**
**dass** jeder Griffräger (5, 6) eine den Holm (1) umgreifende geschlitzte Büchse (21) und einen Schnellspannmechanismus (15, 16, 18) mit einem Betätigungshebel (15) und einem damit verbundenen Exzenterzapfen (16) aufweist, der über ein Kuppelglied (18) mit einem Schenkel (20) der den Holm umgreifenden geschlitzten Büchse (21) verbunden ist, um bei Betätigung des Betätigungshebels (15) das Spannen bzw. Lösen der geschlitzten Büchse (21) in eine bzw. aus einer kraftschlüssig mit dem Holm (1) zusammenwirkenden Position zu bewirken.

2. Mechanismus nach Anspruch 1, wobei der Schnellspannmechanismus (15, 16, 18) bei Betätigung das Aktivieren bzw. Lösen auch eines formschlüssig mit dem Holm (1) zusammenwirkenden Elements (23, 26) bewirkt.

3. Mechanismus nach Anspruch 1, wobei jeder Griffträger (5, 6) mit einem vom Schnellspannmechanismus (15, 16, 18) getrennten und davon unabhängig manuell betätigbaren, formschlüssig mit dem Holm zusammenwirkenden Element (28, 29) ausgestattet ist.

4. Mechanismus nach Anspruch 3, wobei das formschlüssig mit dem Holm (1) zusammenwirkende Element eine am Griffträger (5, 6) angeordnete fingerbetätigbare Wippe (28) aufweist, die mit einem Rastzapfen (29) zum wahlweisen Einrasten in Löcher oder andere Rastaufnahmen des Holms (1) gekuppelt und in die Rastposition durch eine Feder (30) vorgespannt ist.

5. Mechanismus nach Anspruch 2, wobei der Exzenterzapfen (16) mit einem ersten Abschnitt auf das mit dem Schenkel (20) der geschlitzten Büchse (21) verdundene Kuppelglied (18) und mit einem zweiten Abschnitt auf das den Formschluss bewirkende Element (23, 26) wirkt.

6. Mechanismus nach Anspruch 5, wobei das den Formschluss bewirkende Element (23, 26) ein Hebel (23) ist, der ein mit einem Gegenelement (2) des Holms (1) zusammenwirkendes Eingriffselement (26) trägt und mittels des Exzenterzapfens (16) zwischen einer Stellung mit eingreifendem Eingriffselement (26) und einer Stellung mit nicht eingreifendem Eingriffselement bewegbar ist.

7. Mechanismus nach Anspruch 6, wobei der Hebel als Wippe (23) ausgebildet ist, die an einem Ende das Eingriffselement (26) trägt und am anderen Ende einen Hebelarm (22) aufweist, der mit dem Exzenterzapfen (16) zusammenwirkt.

8. Mechanismus nach Anspruch 6 oder 7, wobei das Eingriffselement (26) ein Zapfen ist, der mit entsprechenden Rastlöchern (2) des Holms (1) zusammenwirkt.

9. Mechanismus nach einem der Ansprüche 1 bis 8, wobei jeder Griffträger (5, 6) aus einem entlang des Holms (1) verstellbaren holmseitigen Griffträgerstück (5) und einem griffseitigen Griffträgerstück (6) besteht, wobei das griffseitige Griffträgerstück wahlweise in unterschiedlichen Drehwinkelpositionen mit Bezug auf das holmseitige Griffträgerstück (5) an diesem fixierbar ist.

10. Mechanismus nach Anspruch 9, wobei das holmseitige Griffträgerstück (5) und das griffseitige Griffträgerstück (6) an ihren gegenseitigen Anlageflächen mit einem Formschlussprofil in Gestalt strahlenförmiger Rippen/Nuten-Paarungen oder anderer komplementärer Formschlusselemente versehen sind.

11. Mechanismus nach Anspruch 9 oder 10, wobei ein Schnellspannmechanismus zum Lösen des griffseitigen Griffrägerstücks (6) vom holmseitigen Griffträgerstück (5) und zum Spannen in der gewählten Drehposition vorgesehen ist.

12. Mechanismus nach einem der Ansprüche 1 bis 11, wobei jeder Griffräger (5, 6) über eine Trägerstange (8) mit dem betreffenden Griff (3) verbunden ist und jeder Griff entlang der Trägerstange (8) in mehreren wahlweisen Positionen mit unterschiedlichem Abstand zum Griffträger fixierbar ist.

## Claims

1. Adjustment handle mechanism for roll cars, stacking trolleys and similar, with handle supports (5, 6) that can be adjusted along the rails (1) of the roll car or batch trolley in a longitudinal direction of the rail and can be fixed in selected positions,
**characterized in that**
each handle support (5, 6) has a split sleeve (21) enclosing the rail (1) and a quick-release mechanism (15, 16, 18) with an actuating lever (15) and an eccentric pin (16) connected thereto, which pin is connected to a leg (20) of the split sleeve (21) enclosing the rail by means of a coupling member (18), in order to cause the tensioning or releasing of the split sleeve (21) into or from a position interacting with the rail (1) in a force-fitting manner, respectively, upon actuation of the actuating lever (15).

2. Mechanism according to claim 1, wherein the quick-release mechanism (15, 16, 18) upon actuation also causes the activation or releasing of an element (23, 26) interacting with the rail (1) in a form-fitting manner.

3. Mechanism according to claim 1, wherein each handle support (5, 6) is equipped with an element (28, 29) that is separated from the quick-release mechanism (15, 16, 18), can be manually actuated independently thereof and is interacting with the rail in a form-fitting manner.

4. Mechanism according to claim 3, wherein the element interacting with the rail (1) in a form-fitting manner has a finger-actuated rocker (28) arranged on the handle support (5, 6), the rocker being coupled with a locking pin (29), to selectively lock into holes or other locking retainers of the rail (1), and being pretensioned into the locking position by a spring (30).

5. Mechanism according to claim 2, wherein the eccentric pin (16) acts on the coupling member (18) connected to the leg (20) of the split sleeve (21) with a first section, and on the element (23, 26) causing the form fit with a second section.

6. Mechanism according to claim 5, wherein the element (23, 26) causing the form fit is a lever (23) that carries an engaging element (26) interacting with a counter element of the rail (1) and that can be moved between a position with engaged engaging element (26) and a position with disengaged engaging element by means of the eccentric pin (16).

7. Mechanism according to claim 6, wherein the lever is configured as a rocker (23) that carries the engaging element (26) on one end and has a lever arm (22) interacting with the eccentric pin (16) on the second end.

8. Mechanism according to claim 6 or 7, wherein the engaging element (26) is a pin that interacts with corresponding locking holes (2) of the rail (1).

9. Mechanism according to any one of claims 1 to 8, wherein each handle support (5, 6) consists of a handle support piece (5) on the rail side that can be adjusted along the rail (1) and a handle support piece (6) on the handle side, wherein the handle support piece on the handle side can be selectively fixed on the handle support piece (5) in different rotational angle positions relative thereto.

10. Mechanism according to claim 9, wherein the handle support piece (5) on the rail side and the handle support piece (6) on the handle side are provided with a form-fitting profile in the form of radially shaped pairs of ribs and grooves, or in the form of other complementary form-fitting elements, on their mutual contact surfaces.

11. Mechanism according to claim 9 or 10, wherein a quick-release mechanism is provided for releasing the handle support piece (6) on the handle side from the handle support piece (5) on the rail side and for tensioning in the selected rotational position.

12. Mechanism according to any one of claims 1 to 11, wherein each handle support (5, 6) is connected to the corresponding handle (3) by means of a carrier rod (8), and each handle can be fixed along the carrier rod (8) in several selective positions with a different distance from the handle support.

## Revendications

1. Mécanisme de poignée variable pour chariots roulants, chariots élévateurs et similaires, comprenant des supports de poignée (5, 6) pouvant être déplacés sur des longerons (1) du chariot roulant ou chariot élévateur dans la direction longitudinale du longeron et pouvant être fixés en des positions choisies,
**caractérisé en ce que**
chaque support de poignée (5, 6) présente une douille fendue (21) entourant le longeron (1) et un mécanisme de serrage rapide (15, 16, 18) avec un levier d'actionnement (15) et un tourillon excentrique (16) relié à celui-ci, qui est relié par le biais d'un élément de connexion (18) à une branche (20) de la douille fendue (21) entourant le longeron afin d'entraîner, lors de l'actionnement du levier d'actionnement (15), le serrage ou desserrage de la douille fendue (21) dans une ou hors d'une position coopérant par adhérence avec le longeron (1).

2. Mécanisme selon la revendication 1, dans lequel le mécanisme de serrage rapide (15, 16, 18), lors de l'actionnement, entraîne aussi l'activation ou le desserrage d'un élément (23, 26) coopérant par fermeture géométrique avec le longeron (1).

3. Mécanisme selon la revendication 1, dans lequel chaque support de poignée (5, 6) est équipé d'un élément (28, 29) séparé du mécanisme de serrage rapide (15, 16, 18) et pouvant être actionné manuellement indépendamment de celui-ci, coopérant par fermeture géométrique avec le longeron.

4. Mécanisme selon la revendication 3, dans lequel l'élément coopérant par fermeture géométrique avec le longeron (1) présente une bascule (28) pouvant être actionnée par un doigt et disposée sur le support de poignée (5, 6) qui est raccordée à un tourillon d'encliquetage (29) pour l'encliquetage au choix dans des orifices ou d'autres logements d'encliquetage du longeron (1) et est précontrainte dans la position d'encliquetage par un ressort (30).

5. Mécanisme selon la revendication 2, dans lequel le tourillon excentrique (16) agit avec une première section sur l'élément de connexion (18) relié à la branche (20) de la douille fendue (21) et avec une seconde section sur l'élément (23, 26) entraînant la fermeture géométrique.

6. Mécanisme selon la revendication 5, dans lequel l'élément (23, 26) entraînant la fermeture géométrique est un levier (23) qui porte un élément d'engrènement (26) coopérant avec un élément conjugué (2) du longeron (1) et est mobile au moyen du tourillon excentrique (16) entre une position avec l'élément d'engrènement (26) qui s'engrène et une position avec l'élément d'engrènement qui ne s'engrène pas.

7. Mécanisme selon la revendication 6, dans lequel le levier est réalisé en tant que bascule (23) qui porte à une extrémité l'élément d'engrènement (26) et présente à l'autre extrémité un bras de levier (22) qui coopère avec le tourillon excentrique (16).

8. Mécanisme selon la revendication 6 ou 7, dans lequel l'élément d'engrènement (26) est un tourillon qui coopère avec les orifices d'encliquetage correspondants (2) du longeron (1).

9. Mécanisme selon l'une quelconque des revendications 1 à 8, dans lequel chaque support de poignée (5, 6) se compose d'une pièce de support de poignée (5) côté longeron pouvant être déplacée le long du longeron (1) et d'une pièce de support de poignée (6) côté poignée, dans lequel la pièce de support de poignée côté poignée peut être fixée au choix dans différentes positions d'angle de rotation par rapport à la pièce de support de poignée (5) côté longeron à celle-ci.

10. Mécanisme selon la revendication 9, dans lequel la pièce de support de poignée (5) côté longeron et la pièce de support de poignée (6) côté poignée sont pourvues au niveau de leurs surfaces d'appui opposées d'un profil de fermeture géométrique sous la forme d'appariements de nervures/rainures en forme de rayons ou d'autres éléments de fermeture géométrique complémentaires.

11. Mécanisme selon la revendication 9 ou 10, dans lequel un mécanisme de serrage rapide est prévu pour desserrer la pièce de support de poignée (6) côté poignée de la pièce de support de poignée (5) côté longeron et pour serrer dans la position de rotation choisie.

12. Mécanisme selon l'une quelconque des revendications 1 à 11, dans lequel chaque support de poignée (5, 6) est relié à la poignée concernée (3) par le biais d'une tige de support (8) et chaque poignée peut être fixée le long de la tige de support (8) en plusieurs positions au choix à une distance différente du support de poignée.
